# EUROPÄISCHE PATENTANMELDUNG

(11) **EP 2 182 223 A2**
(43) Veröffentlichungstag der Anmeldung: **05.05.2010**
(21) Anmeldenummer: 09012554.3
(22) Anmeldetag: 05.10.2009
(51) Int. Cl.: F16B 13/12

(54) **Nageldübel**

(30) Priorität: 03.11.2008 DE 102008055692
(71) Anmelder: fischerwerke GmbH & Co. KG, 72178 Waldachtal (DE)
(72) Erfinder: Nehl, Wolfgang, 72178 Waldachtal (DE)

(57) **Zusammenfassung**

Die Erfindung betrifft einen Nageldübel (1) mit einer Spreizhülse (2) und einem Spreizstift (3), wobei die Spreizhülse (2) einen Schaft (4) und einen spreizbaren Verankerungsbereich (5) aufweist. Der Spreizstift (3) greift in die Spreizhülse (2) ein. Um einen Nageldübel (1) mit einer Einschlagsperre (24, 25) für den Spreizstift (3) zu schaffen, der einfach und kostengünstig herzustellen ist, schlägt die Erfindung vor, dass der Spreizstift (3) in einem gebrauchsfertigen Zustand als Einlegeteil in der Spreizhülse (2) angeordnet ist, wobei der Spreizstift (3) mit dem die Spreizhülse (2) bildenden Material nur teilweise umspritzt ist.

## Beschreibung

Die Erfindung betrifft einen Nageldübel mit den Merkmalen des Oberbegriffs des Anspruchs 1.

Ein derartiger Nageldübel ist beispielsweise aus der europäischen Patentschrift EP 1 518 056 B1 bekannt. Der in dieser Druckschrift offenbarte Nageldübel wird beispielsweise zum Anbringen eines Anbauteils an einen Untergrund aus Beton oder Mauerwerk verwendet. Der Nageldübel umfasst eine Spreizhülse und einen als Schraubnagel mit Schraubengewinde ausgeführten Spreizstift. Die Spreizhülse mit einem Schaft und einem spreizbaren Verankerungsbereich, der durch Eintreiben des Spreizstifts in die Spreizhülse aufspreizbar ist, weist eine Einschlagsperre für den Spreizstift auf. Der Spreizstift, mit einem Schaftabschnitt und einem kegelförmigen vorderen Ende, greift mit dem Schraubengewinde in die Einschlagsperre ein. In einem gebrauchsfertigen Zustand ermöglicht die Einschlagsperre, dass der Nageldübel als vormontierte Montageeinheit durch Schläge auf den am hinteren Ende des Schafts angeformten Kopf des Spreizstifts in ein Bohrloch eingeschlagen werden kann, ohne dass dabei der Spreizstift in die Spreizhülse eingetrieben wird und die Spreizhülse aufgespreizt. Die Einschlagsperre überträgt hierbei die Schläge von dem Spreizstift auf die Spreizhülse. Erst nachdem ein am hinteren Ende der Spreizhülse angebrachter Bund am Anbauteil anliegt und die Spreizhülse nicht weiter in das Bohrloch eingeschlagen werden kann, wird die Einschlagsperre durch weitere Schläge auf den Kopf des Spreizstifts überwunden und der Spreizstift relativ zur Spreizhülse in den Verankerungsbereich eingetrieben. Der Spreizstift spreizt erst jetzt den Verankerungsbereich, wodurch der Nageldübel im Bohrloch verankert wird. Das Anbauteil ist somit am Untergrund befestigt.

Nachteilig an dieser bekannten Lösung ist, dass in einem gebrauchsfertigen Zustand der Spreizstift mit der Einschlagsperre der Spreizhülse derart in Eingriff stehen muss, dass der Nageldübel durch Schläge auf den Spreizstift in ein Bohrloch eingeschlagen und nach Anlage des Bundes an dem Anbauteil durch Eintreiben des Spreizstifts in dem Verankerungsbereich der Spreizhülse verspreizt werden kann. Dies erfordert eine Vormontage des Spreizstift mit der Spreizhülse zu einer gebrauchsfertigen Montageeinheit, was insbesondere dann relativ aufwändig ist, wenn der Spreizstift drehend in die Einschlagsperre eingebracht werden muss.

Aufgabe der Erfindung ist es daher, einen Nageldübel mit Einschlagsperre vorzuschlagen, der einfacher und kostengünstiger herzustellen ist.

Diese Aufgabe wird erfindungsgemäß durch einen Nageldübel mit den Merkmalen des Anspruchs 1 gelöst. Der erfindungsgemäße Nageldübel mit einer Spreizhülse und einem Spreizstift weist eine Spreizhülse auf, mit einem Schaft und einem spreizbaren Verankerungsbereich. Der Spreizstift kann ein Nagel, ein Schraubnagel, eine Schraube oder dergleichen sein. Der Nageldübel umfasst eine Einschlagsperre für den Spreizstift. Kennzeichnend für den erfindungsgemäßen Nageldübel ist, dass der Spreizstift in einem gebrauchsfertigen Zustand als Einlegeteil in der Spreizhülse angeordnet und mit dem Material umspritzt ist, das die Spreizhülse bildet. Allerdings ist der Spreizstift nicht vollständig, sondern nur teilweise umspritzt. Der Spreizstift kann somit nach Einbringen des Nageldübels in ein Bohrloch in den Verankerungsbereich der Spreizhülse eingetrieben werden, wobei der Verankerungsbereich spreizt und der Nageldübel im Untergrund befestigt wird. Der Nageldübel ist derart ausgestaltet, dass sich bedingt durch die Art der Herstellung, bei der der Spreizstift mit dem Material der Spreizhülse umspritzt wird, die Einschlagsperre am Nageldübel während der Herstellung der Spreizhülse ausbildet. Somit wird durch die Verwendung des Spreizstifts als Einlegeteil der gebrauchsfertige Zustand schon bei der Herstellung der Spreizhülse des Nageldübels hergestellt. Eine aufwändige, nachträgliche Montage von Spreizstift und Spreizhülse ist nicht mehr notwendig. Eine einfache und kostengünstige Herstellung des erfindungsgemäßen Nageldübels ist möglich.

In einer bevorzugten Ausgestaltungsform des erfindungsgemäßen Nageldübels ist der Spreizstift im gebrauchsfertigen Zustand derart angeordnet, dass der Spreizstift im Wesentlichen außerhalb des Verankerungsbereichs liegt. Von Vorteil ist, wenn die Spitze des Spreizstifts außerhalb des Verankerungsbereichs angeordnet ist. Somit ist gewährleistet, dass der Verankerungsbereich erst nach dem Einschlagen des Nageldübels in ein Bohrloch gespreizt wird, wenn kein weiteres Einschlagen in das Bohrloch mehr möglich ist, beispielsweise weil ein an der Spreizhülse angeordneter Bund am Anbauteil anliegt, und die Einschlagsperre überwunden werden kann.

In einer weiteren bevorzugten Ausgestaltungsform des erfindungsgemäßen Nageldübels ist die Einschlagsperre durch das den Schaftabschnitt des Spreizstifts umgebende Material der Spreizhülse gebildet. Bei der Herstellung der Spreizhülse wird der Schaftabschnitt durch relativ warmes und somit weiches Material umspritzt. Das den Spreizstift umgebende Material liegt somit schon im noch warmen Zustand am Spreizstift an. Nach dem eigentlichen Spritzgussvorgang, beim Abkühlen der Spreizhülse, schwindet das Material, es zieht sich auf Grund der Abkühlung zusammen. Die Spreizhülse wird, bezogen auf die Längsachse des Nageldübels beziehungsweise des Spreizstifts, in radialer Richtung verkürzt, wodurch eine Druckspannung in der Kontaktfläche zwischen dem umspritzten Teil des Spreizstifts und der Spreizhülse entsteht. Diese auf Grund des Schwindens erzeugte Druckspannung ist maßgeblich für die in der Kontaktfläche wirkende Haftreibung, die eine Relativverschiebung des Spreizstifts gegen die Spreizhülse verhindert und somit als Einschlagsperre wirkt. Bevorzugt ist, dass die Einschlagsperre durch Reibschluss, insbesondere durch die Haftreibung, wirkt. Die Einschlagsperre wirkt somit nicht auf Grund einer speziellen geometrischen Ausbildung, sondern auf Grund der durch das Schwinden erzeugten Haftreibung. Somit kann ein Spreizstift mit einer glatten Oberfläche verwendet werden. Dies schließt aber nicht aus, dass der Spreizstift auch ein Gewinde oder Vertiefungen oder Erhebungen, wie zum Beispiel Nuten, Rillen oder Stege aufweist, so dass die Einschlagsperre am Schaftabschnitt unter Umständen auch auf Grund ihrer geometrischen Ausbildung durch Formschluss wirkt.

Eine weitere bevorzugte Ausgestaltungsform des erfindungsgemäßen Nageldübels weist eine Einschlagsperre auf, die durch Material gebildet ist, das ein vorderes Ende des Spreizstifts umgibt. Diese Einschlagsperre kann ebenfalls, wie beim Schaftabschnitt, durch Reibschluss wirken. Bevorzugt ist aber, dass die Einschlagsperre durch Formschluss wirkt, wobei das Material der Spreizhülse das vordere Ende des Spreizstifts umschließt und durch Formschluss dem Eindringen des Spreizstifts in die Spreizhülse entgegenwirkt. Insbesondere kann das vordere Ende des Spreizstifts entsprechend geformt sein oder es können Vertiefungen oder Erhebungen vorhanden sein, durch die die Größe des gewünschten, durch Formschluss erzeugten Eindringwiderstands gesteuert werden kann.

Zur Überwindung der Einschlagsperre ist es notwendig, dass sich der Spreizstift von der Spreizhülse löst, wodurch die Haftreibung verringert wird und der Spreizstift relativ zur Spreizhülse verschiebbar ist. Eine weitere bevorzugte Ausgestaltungsform des erfindungsgemäßen Nageldübels weist daher eine Spreizhülse auf, bei der der Schaft in radialer Richtung dehnbar ist. Bevorzugt ist, dass der Schaft der Spreizhülse geschlitzt ist, wobei der Schlitz im gebrauchsfertigen Zustand durch eine Spritzhaut verschlossen sein kann. Vorzugsweise umfasst der Schaft der Spreizhülse zwei Schalen, die über bewegliche beziehungsweise dehnbare Anbindungen verbunden sind. Hierdurch kann die Dehnbarkeit der Spreizhülse und die Stärke der Einschlagsperre gesteuert werden, da die erzeugte Widerstandskraft aus Reibschluss und Formschluss über die Dehnbarkeit und die Schlitzung der Spreizhülse sowie über die bewegliche Verbindung der Schalen einstellbar ist. Zudem ist somit gewährleistet, dass der Schaft der Spreizhülse beim Überwinden der Einschlagsperre nicht unkontrolliert aufreißt, sondern sich planmäßig dehnt.

In einer weiteren bevorzugten Ausgestaltungsform des erfindungsgemäßen Nageldübels ist das Material der Spreizhülse weicher als das Material des Spreizstifts. Damit ist es möglich, den Nageldübel so im Bohrloch zu verankern, dass große Kräfte durch den Nageldübel vom Anbauteil in den Untergrund eingeleitet werden können. Der harte Spreizstift drückt das Material des Verankerungsbereichs der Spreizhülse gegen die Wand des Bohrlochs. Das relativ weiche Material kann sich dabei gut an Unebenheiten des Bohrlochs anpassen und den Nageldübel optimal im Bohrloch verankern. Beispielsweise ist die Spreizhülse aus Kunststoff, der Spreizstift dagegen aus Stahl oder aus einem faserverstärkten Kunststoff hergestellt.

Die Erfindung wird nachfolgend anhand eines Ausführungsbeispiels näher erläutert. Es zeigen:
- Figur 1: einen erfindungsgemäßen Nageldübel in einer Seitenansicht; und
- Figur 2: den erfindungsgemäßen Nageldübel in einer perspektivischen Schnittdarstellung.

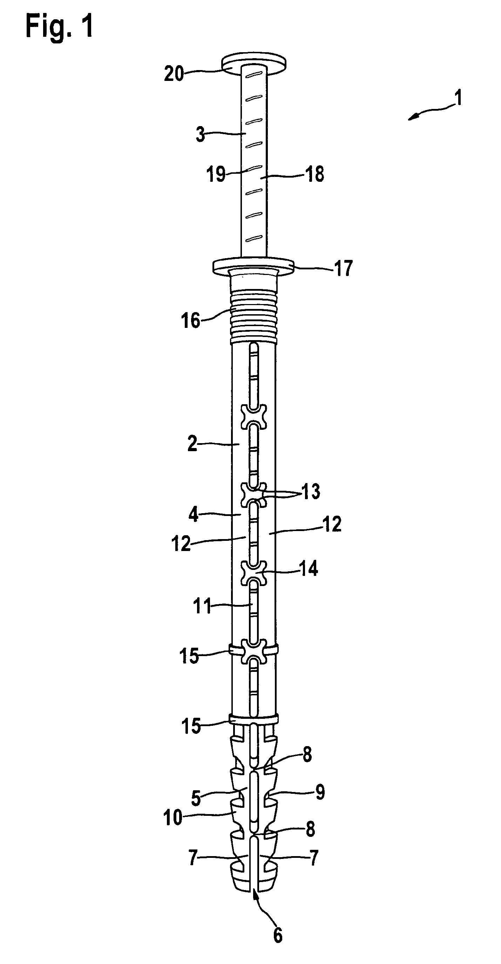

In Figur 1 ist ein erfindungsgemäßer Nageldübel 1 dargestellt mit einer Spreizhülse 2 und einem Spreizstift 3. Die Spreizhülse 2 weist einen Schaft 4 und einen spreizbaren Verankerungsbereich 5 auf, wobei der Verankerungsbereich 5 am in Einbringrichtung vorderen Ende des Schafts 4 angeordnet ist. Im Weiteren bezieht sich die Bezeichnung "vorne" beziehungsweise "hinten" stets auf die Einbringrichtung des Nageldübels 1.

Der Verankerungsbereich 5 ist durch einen in Längsrichtung des Nageldübels 1 verlaufenden ersten Schlitz 6 in zwei Spreizzungen 7 unterteilt, wobei die beiden Spreizzungen 7 durch zwei voneinander beabstandete und normal zur Längsachse des Nageldübels 1 verlaufende Verbindungsstege 8 verbunden sind, die den ersten Schlitz 6 in drei im Wesentlichen gleich große Teile unterteilen. Die Verbindungsstege 8 sind relativ starr, so dass sie beim Eintreiben des Spreizstifts 3 in den Verankerungsbereich 5 reißen. Über die Verbindungsstege 8 stabilisieren sich die Spreizzungen 7 gegenseitig, so dass ein Abknicken einer oder beider Spreizzungen 7 beim Einschlagen des Nageldübels 1 in ein nicht dargestelltes Bohrloch verhindert wird. An ihrer Außenseite weisen die beiden Spreizzungen 7 Vertiefungen 9 und zahnartige Elemente 10 auf, die den Halt des Verankerungsbereichs 5 im Bohrloch verbessern.

An den Verankerungsbereich 5 schließt sich der Schaft 4 der Spreizhülse 2 an. Der Schaft 4 ist über einen wesentlichen Teil seiner Länge ebenfalls geschlitzt, wobei der dadurch entstehende zweite Schlitz 11 die gleiche Orientierung aufweist wie der erste Schlitz 6 des Verankerungsbereichs 5. Der zweite Schlitz 11 unterteilt den Schaft 4 in zwei Schalen 12, die über bewegliche Anbindungen 13 miteinander verbunden sind, wodurch der zweite Schlitz 11 in fünf im Wesentlichen gleich große Teile unterteilt ist. Die Anbindungen 13 weisen einen halbkreisringförmigen Querschnitt auf, so dass der Schaft 4 der Spreizhülse 2 in zur Längsachse des Nageldübels 1 radialer Richtung dehnbar ist, wobei bei einer Dehnung die Anbindungen 13 gestreckt werden. Die Radialenanbindungen 13 sind in vier Paaren derart angeordnet, dass die Scheitel der Halbkreise sich gegenüber liegen, wodurch zwischen den einzelnen Teilen des zweiten Schlitzes 11 X-förmige Öffnungen 14 entstehen. Der zweite Schlitz 11 kann durch eine nicht dargestellte Spitzhaut verschlossen sein, die aufreißen kann, wenn beim Eintreiben des Spreizstifts 3 in die Spreizhülse 2 die Anbindungen 13 gestreckt werden.

Im vorderen Bereich des Schafts 4 ist ein erster und ein zweiter umlaufender Verstärkungsbund 15 angeordnet. Im hinteren Bereich des Schafts 4 weist der Nageldübel 1 einen weiteren ungeschlitzten und umlaufenden Verstärkungsbereich 16 auf, der den Schaft 4 mit einem umlaufenden, radial abstehenden Bund 17 als Anschlag abschließt.

Der Nageldübel 1 befindet sich in einem gebrauchsfertigen Zustand, in dem der Spreizstift 3 als Einlegeteil in der Spreizhülse 2 angeordnet ist. Der Spreizstift 3 ist als Stahlnagel ausgebildet und mit dem die Spreizhülse 2 bildenden Material, in diesem Fall mit im Vergleich zum Stahlnagel relativ weichem Kunststoff, umspritzt. Der Nageldübel 1 ist beispielsweise im Spritzgussverfahren hergestellt. Der Spreizstift 3 weist einen Schaftabschnitt 18 auf, der allerdings nur teilweise umspritzt ist. Am Schaftabschnitt 18 sind Rillen 19 angeordnet und an seinem hinteren Ende befindet sich ein Kopf 20, der bundartig mit gegenüber dem Schaftabschnitt 18 vergrößertem Durchmesser ausgebildet ist.

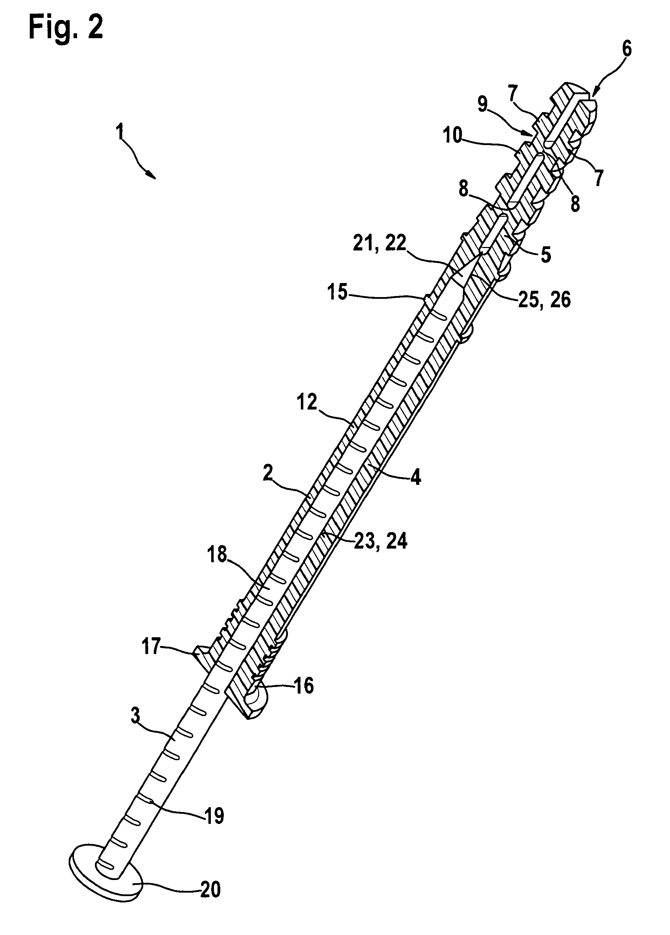

In Figur 2 ist die Anordnung des Spreizstifts 3 in der Spreizhülse 2 als Einlegeteil im gebrauchsfertigen Zustand zu sehen. Die Spreizhülse 2 des Nageldübels 1 ist im Spritzgussverfahren aus Kunststoff hergestellt, wobei der Spreizstift 3 aus Stahl als Einlegeteil in ein nicht dargestelltes Spritzgusswerkzeug eingelegt und der Schaftabschnitt 18 nur teilweise umspritzt wird. Der Schaftabschnitt 18 des Spreizstifts 3 liegt außerhalb des Verankerungsbereichs 5, ebenso wie die am vorderen Ende 21 des Spreizstifts 3 angeformte pyramidenförmige Spitze 22.

Der Spreizstift 3 dient als Kern für das Spritzgusswerkzeug, an dem der warme und spritzfähige Kunststoff vollflächig anliegt. Kühlt der Kunststoff nach dem Ausformen aus dem Spritzgusswerkzeug ab, so schwindet er, das heißt, die Spreizhülse 2 zieht sich in radialer Richtung zusammen, wodurch sie sich um den Spreizstift 3 spannt. Hierdurch entsteht eine starke Pressung zwischen Spreizhülse 2 und Spreizstift 3, die zu einer großen Haftreibung zwischen Spreizhülse 2 und Spreizstift 3 führt. Die Anlagefläche 23 zwischen der Spreizhülse 2 und dem Schaftabschnitt 18 des Spreizstifts 3 bildet eine erste Einschlagsperre 24, die durch Reibschluss wirkt. Als zweite Einschlagsperre 25 wirkt die, durch das Umspritzen der pyramidenförmigen Spitze 22 entstandene Querschnittsverengung 26 am Übergangsbereich zwischen Schaft 4 und Verankerungsbereich 5 der Spreizhülse 2. Die zweite Einschlagsperre 25 wirkt im Wesentlichen durch Formschluss. Ebenso durch Formschluss wirken zudem die am Schaftabschnitt 18 des Spreizstifts 3 angeordneten Rillen 19, in die beim Spritzgussvorgang Material der Spreizhülse 2 eindringt, was eine zusätzliche Verbindung zwischen Schaft 4, Spreizhülse 2 und dem Schaftabschnitt 18 des Spreizstifts 3 bewirkt. Auf diese Weise ist es möglich, einen Nageldübel 1 mit wirksamer Einschlagsperre 24, 25 auf einfache und preisgünstige Weise herzustellen, ohne dass eine aufwändige Montage von Spreizhülse 2 und Spreizstift 3 notwendig ist.

Wird der Nageldübel 1 nun durch eine Bohrung in einem nicht dargestellten Anbauteil in einem Bohrloch in einem ebenfalls nicht dargestellten tragfähigen Untergrund, beispielsweise aus Beton, eingeschlagen, so übertragen die Einschlagsperren 24, 25 die Schläge, die beispielsweise mit einem Hammer auf den Kopf 20 des Spreizstifts 3 eingeleitet werden, auf die Spreizhülse 2, die dadurch in die Bohrung und das Bohrloch eingeschoben wird, bis der Bund 17 an Anbauteil anliegt. Erst dann bewirken die Schläge eine Dehnung des Schafts 4 der Spreizhülse 2 in radialer Richtung, wobei die halbkreisförmigen Anbindungen 13 gestreckt und die beiden Schalen 12 auseinander gepresst werden. Hierdurch verringert sich die Reibung zwischen Schaft 4 und Schaftabschnitt 18, so dass der Spreizstift 3 die erste Einschlagsperre 24 überwinden kann. Zudem löst sich das Material des Schafts 4 der Spreizhülse 2 aus den Rillen 19. Durch weitere Schläge wird die Querschnittsverengung 26 zerstört und die zweite Einschlagsperre 25 überwunden. Der Spreizstift 3 kann nun relativ zur Spreizhülse 2 in den spreizbaren Verankerungsbereich 5 eingetrieben werden, wodurch die beiden Verbindungsstege 8 aufreißen und die beiden Spreizzungen 7 mit ihren Vertiefungen 9 und zahnartigen Elementen 10 gegen die Wand des Bohrlochs gedrückt werden, bis der spreizbare Verankerungsbereich 5 vollständig verspreizt, der Nageldübel 1 im Bohrloch verankert und das Anbauteil am Untergrund befestigt ist.

### Bezugszeichenliste

### Nageldübel

- 1: Nageldübel
- 2: Spreizhülse
- 3: Spreizstift
- 4: Schaft der Spreizhülse 2
- 5: spreizbarer Verankerungsbereich der Spreizhülse 2
- 6: erster Schlitz
- 7: Spreizzunge
- 8: Verbindungssteg
- 9: Vertiefung
- 10: zahnartiges Element
- 11: zweiter Schlitz
- 12: Schale
- 13: Anbindung
- 14: X-förmige Öffnung
- 15: Verstärkungsbund
- 16: Verstärkungsbereich
- 17: Bund
- 18: Schaftabschnitt des Spreizstifts 3
- 19: Rillen
- 20: Kopf
- 21: vorderes Ende des Spreizstifts 3
- 22: Spitze
- 23: Anlagefläche
- 24: erste Einschlagsperre
- 25: zweite Einschlagsperre
- 26: Querschnittverengung

## Patentansprüche

1. Nageldübel (1) mit einer Spreizhülse (2) und einem Spreizstift (3),
- wobei die Spreizhülse (2) einen Schaft (4) und einen spreizbaren Verankerungsbereich (5) aufweist, und
- wobei der Nageldübel (1) eine Einschlagsperre (24, 25) für den Spreizstift (3) aufweist,
**dadurch gekennzeichnet,**
- **dass** der Spreizstift (3) in einem gebrauchsfertigen Zustand als Einlegeteil in der Spreizhülse (2) angeordnet ist,
- das mit dem die Spreizhülse (2) bildenden Material umspritzt ist, und
- **dass** der Spreizstift (3) nur teilweise umspritzt ist.

2. Nageldübel nach Anspruch 1, **dadurch gekennzeichnet, dass** der Spreizstift (3) im gebrauchsfertigen Zustand derart angeordnet ist, dass der Spreizstift (3) im Wesentlichen außerhalb des Verankerungsbereichs (5) liegt.

3. Nageldübel nach Anspruch 1 oder 2, **dadurch gekennzeichnet, dass** die Einschlagsperre (24) durch das den Spreizstift (3) umgebende Material gebildet ist.

4. Nageldübel nach Anspruch 3, **dadurch gekennzeichnet, dass** die Einschlagsperre (24) durch Reibschluss wirkt.

5. Nageldübel nach einem der Ansprüche 1 bis 4, **dadurch gekennzeichnet, dass** die Einschlagsperre (25) durch Material gebildet ist, das ein vorderes Ende (21) des Spreizstifts (3) umgibt.

6. Nageldübel nach einem der Ansprüche 1 bis 5, **dadurch gekennzeichnet, dass** die Einschlagsperre (25) durch Formschluss wirkt.

7. Nageldübel nach einem der Ansprüche 1 bis 6, **dadurch gekennzeichnet, dass** der Schaft (4) der Spreizhülse (2) in radialer Richtung dehnbar ist.

8. Nageldübel nach einem der Ansprüche 1 bis 7, **dadurch gekennzeichnet, dass** der Schaft (4) der Spreizhülse (2) geschlitzt ist.

9. Nageldübel nach einem der Ansprüche 1 bis 8, **dadurch gekennzeichnet, dass** der Schaft (4) der Spreizhülse (2) zwei Schalen (12) umfasst, die über bewegliche Anbindungen (13) verbunden sind.

10. Nageldübel nach einem der Ansprüche 1 bis 9, **dadurch gekennzeichnet, dass** die Spreizhülse (2) aus einem weicheren Material als der Spreizstift (3) ist.
